# EUROPÄISCHE PATENTSCHRIFT

(11) **EP 3 152 999 B1**
(45) Veröffentlichungstag und Bekanntmachung des Hinweises auf die Patenterteilung: **03.10.2018**
(21) Anmeldenummer: 16002091.3
(22) Anmeldetag: 28.09.2016
(51) Int. Cl.: A01D 41/14, A01D 34/30

(54) **MESSERANTRIEB FÜR SCHNEIDWERK ZUM ANBAU AN ERNTEMASCHINEN**
KNIFE DRIVE FOR CUTTING UNIT FOR MOUNTING ON HARVESTING MACHINES
ENTRAÎNEMENT DE LAME D'UNE BARRE DE COUPE À INSTALLER SUR DES MOISSONNEUSES

(30) Priorität: 05.10.2015 DE 102015116890
(43) Veröffentlichungstag der Anmeldung: 12.04.2017
(73) Patentinhaber: Carl Geringhoff GmbH & Co. KG, 59227 Ahlen (DE)
(72) Erfinder: WEBERMANN, Dirk, 48308 Senden (DE); SCHULZE SELTING, Stephan, 59320 Enniger (DE); POKRIEFKE, Michael, 27798 Hude (DE)
(74) Vertreter: Weeg, Thomas

(56) Entgegenhaltungen:
- DE-A1- 19 524 039
- DE-U1- 8 702 363
- US-A- 4 909 025
- US-A- 5 497 605

## Beschreibung

Die vorliegende Erfindung bezieht sich auf ein Schneidwerk nach dem Oberbegriff des Anspruchs 1.

Aus der Schrift DE 10 2010 040 870 A1 ist ein gattungsgemäßes Schneidwerk bekannt. In dieser Schrift sind als Antriebsvorrichtung von einem Getriebe bewegte Winkelhebel offenbart, mit denen die Messerbalkenteile hin und her bewegt werden. Die Winkelhebel sind innerhalb einer Schleife eines endlos umlaufenden Fördergurtes angeordnet, weil der Messerantrieb nicht zwischen den Messerbalken und den Schneidwerksboden passt. Die Winkelhebel müssen im Rahmen des Schneidwerks abgestützt sein und mit ihren messerseitigen Enden aus der Schleife des Fördergurtes seitlich herausragen. Dadurch sind die Winkelhebel voluminös. Wegen ihrer Größe benötigen sie eine entsprechend voluminös gestaltete und schwere Abstützung im Rahmen. Die Gelenke des Winkeltriebs sind einem erheblichen Schmutzanfall während des Erntebetriebs ausgesetzt.

Aus der gattungsbildenden Schrift US 5,497,605 A ist ein Antrieb eines mehrteiligen Messerbalkens offenbart, dessen Antriebselemente jedoch oberhalb des Schneidwerksbodens angeordnet sind und die deshalb den Gutfluss stören.

Aus der Schrift DE 87 02 363.6 ist ein Antrieb für die Messer eines gattungsbildenden Mähwerkes bekannt, bei dem die Eingangswelle von hinten kommend etwa mittig der Kurbelwelle im Getriebegehäuse mündet. Die Eingangswelle ist neben den Kurbelzapfen angeordnet. Das auf der Eingangswelle montierte Kronenrad der ersten Getriebestufe ist so groß, dass es nahezu der gesamten Bauhöhe der etwa vertikal stehenden, neben dem Kronenrad angeordneten Kurbelwelle entspricht. Die exzentrische Bewegung der auf der Kurbelwelle montierten Kurbelzapfen wird auf neben der Kurbelwelle angeordnete Abtriebs- und Hohlwellen übertragen, deren Höhe etwa der Höhe des Kronenrades und der Kurbelwelle entspricht. Aus dieser Bauform ergibt sich ein sehr großes, schweres und unhandliches Getriebegehäuse.

Es ist die Aufgabe der vorliegenden Erfindung, einen möglichst kompakt bauenden, leichten Antrieb für die Bewegung der Messerbalkenteile zu schaffen. Insbesondere soll die Antriebsvorrichtung so kurz ausgeführt werden, dass sie direkt hinter dem Messerbalken angeordnet werden kann, um nicht den Gutfluss des geschnittenen Ernteguts hinter dem Messerbalken und die Anordnung und Ausgestaltung der Förderorgane zu stören.

Die Aufgabe wird erfindungsgemäß für ein gattungsgemäßes Schneidwerk gelöst, indem die Exzenterscheiben, die Antriebswelle und das Zahnrad übereinander angeordnet sind.

Es ist der Vorteil der erfindungsgemäßen Anordnung der Exzenterscheiben, der Antriebswelle und des Zahnrades in verschiedenen Ebenen übereinander, dass die in dem Getriebegehäuse befindliche Antriebsvorrichtung außerordentlich kurz baut. Auf Winkelhebel, die Förderorgane seitlich umgreifen, kann verzichtet werden. Alle Antriebskomponenten befinden sich in einem geschlossenen Getriebegehäuse, das einen guten Schutz vor Schmutz und Feuchtigkeit bietet. Alle bewegten Antriebskomponenten innerhalb des Getriebegehäuses können mit einer Ölschmierung versorgt werden, woraus sich ein geringer Wartungsbedarf und eine hohe Standzeit der Bauteile ergibt. Die Ölschmierung kann auch zur Kühlung der Getriebelager und Verzahnungen dienen. Die beim Erntebetrieb innerhalb des Getriebegehäuses auftretenden Kraftmomente können im Getriebegehäuse gehalten werden. Die Antriebswelle kann bequem von der Seite oder von hinten zum Getriebegehäuse geführt werden.

Bei einer Anordnung, bei der zumindest die Antriebswelle, das Winkelgetriebe, die Exzenterwelle und die Exzenterscheiben im Innenraum des Getriebegehäuses angeordnet sind, ergibt sich eine kompakte und geschützte Bauweise der Antriebsvorrichtung. Zusätzlich können auch noch die Exzenterhebel, die Schwenkhebel und die Schwenkwellen im Inneren des Getriebegehäuses angeordnet sein. Dadurch ergibt sich eine schnelle und vereinfachte Montage, und alle im Getriebegehäuse angeordneten Bauteile sind gut gegen Schmutz und Beschädigungen geschützt. Gesonderte Lager, Halterungen und Verkleidungen für diese Bauteile können entfallen.

Nach einer Ausgestaltung der Erfindung sind die Schwenkwellen weiter vorne im Getriebegehäuse angeordnet als die Exzenterwelle. Da die Exzenterwelle in der Hochachse innerhalb des Getriebegehäuses zumindest vier verschiedene Ebenen abdeckt, die Schwenkwellen im Vergleich dazu nur die Ebenen der Exzenterhebel mit der darunter befindlichen Ebene der Eingangswelle, kann das Getriebegehäuse zum Messerbalken hin flacher bauend ausgestaltet werden. Dadurch kann die Schwelle vom Messerbalken zum Schneidwerksboden niedrig gehalten werden.

Nach einer Ausgestaltung der Erfindung weist der Gehäusedeckel des Getriebegehäuses in seinem vorderen den Messerbalkenteilen zugewandten Bereich eine angeschrägte Fläche auf. Die Schrägfläche vereinfacht den Transport des geschnittenen Ernteguts vom Messerbalken zum Schneidwerksboden, von wo aus das Erntegut mit den Förderorganen abgefördert werden kann.

Nach einer Ausgestaltung der Erfindung verlaufen die Exzenterhebel parallel oder zumindest annähernd parallel zur Längsachse der Messerbalkenteile. Durch die parallele oder zumindest annähernd parallele Lage der Exzenterhebel zur Längsachse der Messerbalkenteile ergibt sich ein gut beherrschbarer Kraftverlauf der Kraftmomente, die beim Betrieb des Schneidwerks auftreten. Bei einer von der Seite in das Getriebegehäuse mündenden Antriebswelle verlaufen die Kraftmomente der Exzenterhebel auch parallel dazu. Das Getriebegehäuse bleibt weitgehend von Torsionskräften verschont und kann entsprechend leichter und günstiger ausgelegt werden.

Nach einer Ausgestaltung der Erfindung weisen die Exzenterscheiben einen Drehwinkelversatz von 0° bis 179° oder 181° bis 360° zueinander auf. Bevorzugt haben die Exzenterscheiben einen Drehwinkelversatz von 90°/270°. Bei einem Drehwinkelversatz von 180° würden die Messerbalkenteile bei einer Drehung der Exzenterwelle an ihren inneren Stirnseiten am Totpunkt aufeinander stoßen, um sich danach wieder voneinander zu entfernen. Dadurch bliebe der Mittelbereich zwischen den beiden Messerbalkenteilen ungemäht, und es bliebe ein schmaler Streifen des Ernteguts ungemäht stehen mit einem entsprechenden Verlust von Erntegut. Um dies zu vermeiden oder den Verlust zumindest erheblich zu verringern, ergibt sich aus der Vermeidung eines Drehwinkelversatzes von 180° eine teilweise Überschneidung der Hubwege der Messerbalkenteile zueinander, wodurch sich der ungemäht stehen bleibende Bereich des Ernteguts zumindest erheblich verkleinert oder ganz vermieden werden kann.

Nach einer Ausgestaltung der Erfindung ist die in das Getriebegehäuse mündende Antriebswelle und/oder die Abtriebswelle quer zur Fahrtrichtung ausgerichtet. Die Angabe "quer" zur Fahrtrichtung ist dabei nicht so zu verstehen, dass die Antriebswelle und/oder die Abtriebswelle genau quer zur Fahrtrichtung verlaufen müssen, sondern sie können auch überwiegend quer im Verhältnis zu einer Längsausrichtung angeordnet sein. Durch eine Lage der Antriebswelle und/oder die Abtriebswelle, die genau parallel oder annähernd parallel zum Messerbalken angeordnet ist, wird ein kurz und flach bauender Antriebsstrang möglich.

Nach einer Ausgestaltung der Erfindung ist die Antriebswelle von einem seitlich am Schneidwerk angeordneten Hydraulik- oder Elektromotor angetrieben. Für den Antrieb des Messerbalkens genügt es, eine Hydraulik- oder Elektroleitung bis zum seitlich am Schneidwerk angeordneten Hydraulik- oder Elektromotor zu legen und die Drehbewegung des Hydraulik- oder Elektromotors über ein Getriebe auf die Antriebswelle zu übertragen, die sich vom Hydraulik- oder Elektromotor bis zum Getriebegehäuse des Messerbalkenantriebs erstreckt. Die Hydraulik- oder Elektroleitung kann leicht und kostengünstig hergestellt werden. Für den Messerbalkenantrieb genügt es, eine Antriebswelle nur von einer Seite des Schneidwerks her zum Getriebegehäuse zu führen, so dass auch diese Lösung kostengünstig realisierbar ist.

Nach einer Ausgestaltung der Erfindung ist der Antriebsstrang von einer mechanischen Kraftquelle an der Rückwand des Schneidwerks zur Antriebswelle über eine Welle einer Umlenkrolle eines quer zur Vorfahrtrichtung des Schneidwerks umlaufenden Bandförderers oder über eine gesonderte Antriebswelle geführt, wobei die am vorderen Ende der Umlenkrolle oder der gesonderten Antriebswelle mündende Rotationsbewegung über ein dort angeordnetes Winkelgetriebe auf die Antriebswelle übertragen wird. Als mechanische Kraftquelle an der Rückwand des Schneidwerks kann beispielsweise ein Hydraulikmotor oder Elektromotor dienen, oder es wird eine mechanische Antriebskraft von einer Zapfwelle der Erntemaschine übertragen, an die das Schneidwerk angebaut ist. Der erfindungsgemäße Messerbalkenantrieb kann beispielsweise in Draperschneidwerken eingesetzt werden, bei denen als Förderorgane zur Abförderung des geschnittenen Ernteguts endlos umlaufende Bandförderer verwendet sind. Die äußeren Bandförderer eines Draperschneidwerks laufen quer zur Vorfahrtrichtung des Schneidwerks um, so dass die Welle einer Umlenkrolle dieser Bandförderer mit ihrer Drehachse vom Messerbalken zur Rückwand des Schneidwerks weisend ausgerichtet ist. Insbesondere die Umlenkrolle, die auf der zur Schneidwerksmitte weisenden Seite des in Förderrichtung letzten quer fördernden Bandförderers vor dem mittleren in Längsrichtung des Schneidwerks fördernden Bandförderers angeordnet ist, kann vorteilhaft als Durchtrieb der Antriebskraft von der Rückseite des Schneidwerks zur Antriebswelle verwendet werden, weil sich von dort aus nur noch kurze Wege vom Winkelgetriebe bis zum Getriebegehäuse ergeben.

Die Welle der Umlenkrolle kann selbst als Kraftübertragungsmittel verwendet werden, oder die Welle der Umlenkrolle ist als Hohlwelle ausgebildet, durch die eine gesonderte Antriebswelle hindurch geführt ist. Die gesonderte Antriebswelle kann auch neben einer Umlenkrolle und unabhängig von dieser verlaufen. Dies hat den Vorteil, dass die Arbeitsdrehzahlen der Umlenkrolle und der gesonderten Antriebswelle unterschiedlich gesteuert werden können. So ist es bei dieser Lösung möglich, den Bandförderer laufen zu lassen, während der Messerantrieb abgeschaltet ist, oder der Messerantrieb kann anlaufen, während der Bandförderer noch stehen bleibt, um die Anlaufmomente niedrig zu halten. Die gesonderte Antriebswelle bildet eine gute Abstützung der Umlenkrolle gegen ein Durchbiegen, wenn die Bänder des Bandförderers gespannt sind. Unterschiedliche Geschwindigkeiten der Umlenkrolle und der gesonderten Antriebswelle können beispielsweise mit einem Überlagerungsgetriebe wunschgemäß eingestellt werden.

Nach einer Ausgestaltung der Erfindung ist mit der Antriebswelle oder der Exzenterwelle eine Hydraulikpumpe antriebsverbunden, mit der das im Getriebegehäuse befindliche Öl in einen Kühlkreislauf gepumpt wird. Die Hydraulikpumpe kann kostengünstig in das Getriebegehäuse integriert werden. Durch den Kühlkreislauf kann die Betriebstemperatur des im Getriebegehäuse befindlichen Öls in einem niedrigen Bereich gehalten werden. Die Ölkühlung hält indirekt auch die Betriebstemperaturen der im Getriebegehäuse angeordneten beweglichen Antriebskomponenten niedrig. Der Kühlkreislauf kann beispielsweise durch Rohre des Rahmens oder anderer Bauteile des Schneidwerks hindurch gelegt sein, um nicht zusätzliche Kühler in das Schneidwerk einbauen zu müssen. Ein gesonderter Kühlkreislauf ist vorteilhaft, weil sich Kühlrippen am Getriebegehäuse schnell mit Schmutz zusetzen oder bei einem Kontakt mit dem Boden oder Hindernissen beschädigt werden können.

Nach einer Ausgestaltung der Erfindung ist an den Kühlkreislauf oder die Hydraulikpumpe ein Hydraulikventil angeschlossen, mit dem die Bandspannung eines Bandförderers schaltbar ist. Die hydraulische Leistung der Hydraulikpumpe kann dazu genutzt werden, über ein Ventil die Bandspannung eines Bandförderers zu regeln. Über eine hydraulische Bandspannvorrichtung kann beispielsweise der Anlauf der Bandförderer verzögert werden, um die Anlaufmomente beim Starten des Schneidwerks möglichst niedrig zu halten.

Nach einer Ausgestaltung der Erfindung weist das Getriebegehäuse eine horizontal verlaufende Teilung zwischen dem Gehäuseboden und dem Gehäusedeckel auf. Der Gehäuseboden kann so geformt sein, dass die Eingangswelle, die Exzenterwelle und die Schwenkwellen mit ihren jeweiligen Lagern leicht von oben eingesetzt werden können. Wenn der Gehäusedeckel die Lager für die Exzenterwelle und die Schwenkwellen aufnimmt, ist eine vereinfachte Montage der im Getriebegehäuse angeordneten Antriebskomponenten möglich.

Nach einer Ausgestaltung der Erfindung ist die Antriebswelle mit einer Abtriebswelle antriebsverbunden, die zumindest ein Förderorgan des Schneidwerks antreibt. Das Getriebegehäuse wird auf diese Weise genutzt, um die mit der Antriebswelle im vorderen Bereich des Schneidwerks verfügbare Antriebsleistung für andere Organe des Schneidwerks, insbesondere eines Förderorgans, zu nutzen. So ist es beispielsweise möglich, von der Abtriebswelle aus über ein Winkelgetriebe eine Umlenkrolle eines quer fördernden Bandförderers anzutreiben. Die Abtriebswelle kann mit der Antriebswelle direkt verbunden sein, oder die Antriebskraft wird über ein zwischengeschaltetes Antriebsmittel, wie beispielsweise ein Zahnrad, auf die Abtriebswelle übertragen.

Nach einer Ausgestaltung der Erfindung ist im Antriebsstrang zur Antriebswelle eine gesteuerte Lamellenkupplung angeordnet. Die gesteuerte Lamellenkupplung ermöglicht ein langsames Anlaufen des Antriebs. Die dabei auftretenden Kraftmomente können dadurch geringer gehalten werden. Das Schneidwerk kann dadurch auch an Erntemaschinen angebaut werden, deren Antriebe nur auf kleinere Anlaufmomente ausgelegt sind. Außerdem können die Wellen und Getriebe im Schneidwerk auf die niedrigeren Anlaufmomente ausgelegt werden, was Gewicht und Kosten einspart.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand von Ausführungsbeispielen näher erläutert werden. Es zeigen:
- Fig. 1:: eine Schnittansicht durch ein Getriebegehäuse,
- Fig. 2:: eine Ansicht von schräg vorne auf ein Getriebegehäuse,
- Fig. 3:: eine Ansicht auf einen Antriebsstrang, bei dem die Antriebskraft von der Rückseite des Schneidwerks zum Getriebegehäuse über eine gesonderte Antriebswelle geführt wird, und
- Fig. 4:: einen Antriebsstrang, bei dem eine gesonderte Antriebswelle durch die als Hohlwelle ausgebildete Umlenkrolle eines quer fördernden Bandförderers ausgebildet ist.

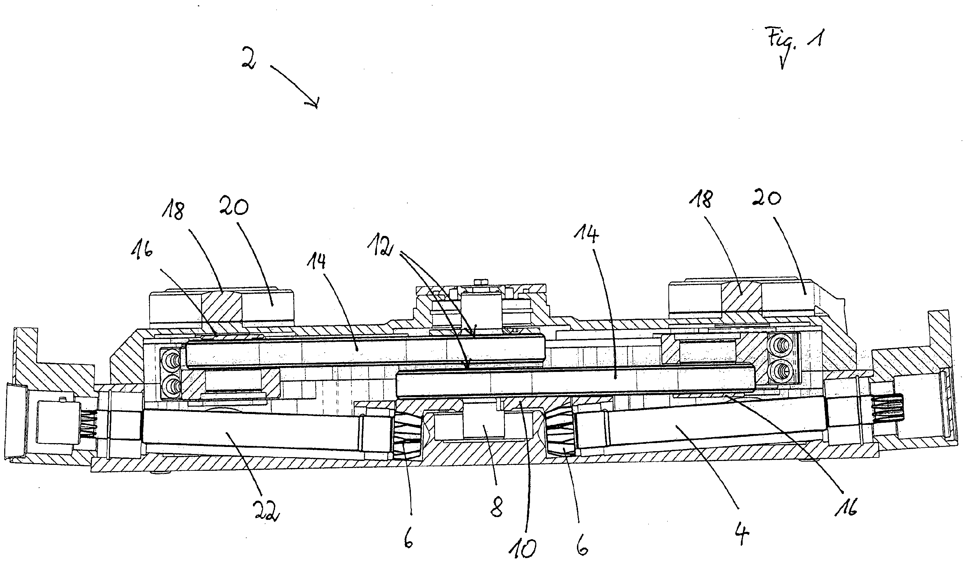

In Fig. 1 ist in einer Schnittansicht ein Getriebegehäuse 2 gezeigt. In der untersten Ebene des Getriebegehäuses 2 mündet die Antriebswelle 4 in das Getriebegehäuse 2. Über ein Winkelgetriebe 6 wird die Drehzahl der Antriebswelle 4 auf das Zahnrad 10 übertragen, das drehfest in einer zweiten Ebene über der Antriebswelle 4 auf der Exzenterwelle 8 angeordnet ist. Die Antriebswelle 4 ist im Ausführungsbeispiel annähernd parallel zum Messerbalken 34 angeordnet. In Querrichtung verbleiben in der horizontalen und vertikalen Ebene jeweils einige Winkelgrade, um die die Antriebswelle 4 im Verhältnis zum Messerbalken 34 angewinkelt ist. Entsprechendes gilt für die Abtriebswelle 22. Über das Zahnrad 10 dreht sich auch die Exzenterwelle 8.

Auf der Exzenterwelle 8, die im Wesentlichen in vertikaler Richtung in das Getriebegehäuse 2 eingebaut ist, befinden sich in einer dritten und vierten Ebene zwei Exzenterscheiben 12, die in der in Fig. 1 gezeigten Schnittansicht von den Exzenterhebeln 14 verdeckt sind. Die Exzenterhebel sind gelenkig mit Schwenkhebeln 16 verbunden, die jeweils drehfest mit einer Schwenkwelle 18 verbunden sind. Die Schwenkwellen 18 ragen aus dem Getriebegehäuse 2 nach oben hin heraus und übertragen ihre Drehbewegung auf Kurbelarme 20, die drehfest auf die Schwenkwellen 18 aufgesetzt sind. Die Schwenkbewegungen der Kurbelarme 20 werden über zeichnerisch nicht näher dargestellte Verbindungselemente auf jeweils ein Messerbalkenteil übertragen.

Die Drehbewegung der Antriebswelle 4 wird über das Zahnrad 10 auf die Abtriebswelle 22 übertragen, die auf der der Exzenterwelle 8 gegenüber liegenden Seite des Getriebegehäuses 2 angeordnet ist. Die Übertragung der Drehbewegung der Antriebswelle 4 auf die Abtriebswelle 22 stellt einen Durchtrieb der Antriebskraft dar.

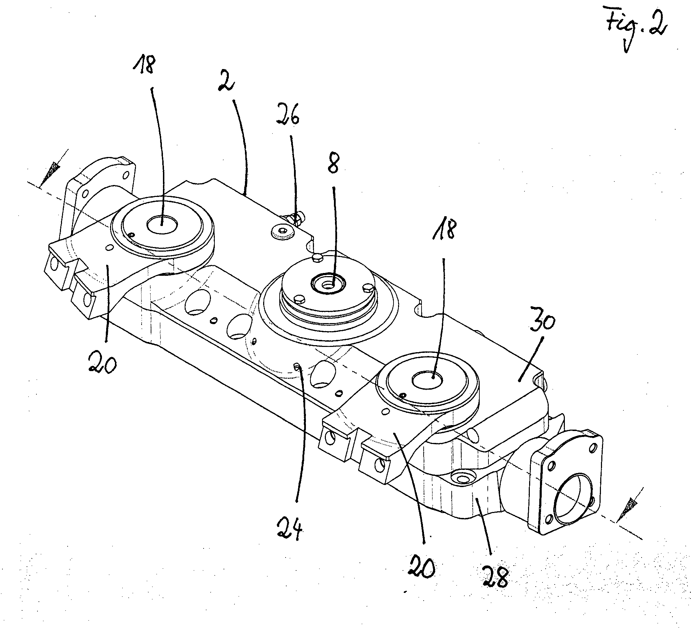

In Fig. 2 ist das Getriebegehäuse 2 aus einer Ansicht von schräg oben in einem geschlossenen Zustand gezeigt. Aus dieser Ansicht sind die Antriebswelle 4 und die Abtriebswelle 22 gut erkennbar. Auch sind die beiden nach vorne auf den Messerbalken hin ausgerichteten Kurbelarme 20 gut erkennbar, die beim Erntebetrieb eine oszillierende Bewegung ausführen, die auf die Messerbalkenteile übertragen wird. Auch ist die Abdeckung der Exzenterwelle 8 gut erkennbar. Die Schwenkwellen 18, an denen die Kurbelarme 20 befestigt sind, befinden sich weiter vorne im Getriebegehäuse 2 als die Exzenterwelle 8. Wenn in dieser Beschreibung von vorne und hinten die Rede ist, so ist vorne immer die Richtung, in die das Schneidwerk beim Ernten in den zu erntenden Bestand hineingefahren wird, und hinten die Richtung, in der sich die Erntemaschine befindet, an die das Schneidwerk angebaut ist.

In Fig. 2 ist auch die angeschrägte Fläche 24 gut zu erkennen, die nach vorne hin abfallend gestaltet ist. Des Weiteren ist in Fig. 2 auch die horizontal verlaufende Teilung zwischen dem Gehäuseboden 28 und dem Gehäusedeckel 30 zu erkennen. Auf der Rückseite des Getriebegehäuses 2 befindet ich noch ein Ölanschluss 26, über den von einer zeichnerisch nicht näher dargestellten Hydraulikpumpe, die sich im Inneren des Getriebegehäuses 2 befindet, Öl in einen Kühlkreislauf und/oder Drucköl zur Betätigung eines ebenfalls zeichnerisch nicht näher dargestellten Hydraulikventils abgegeben werden kann.

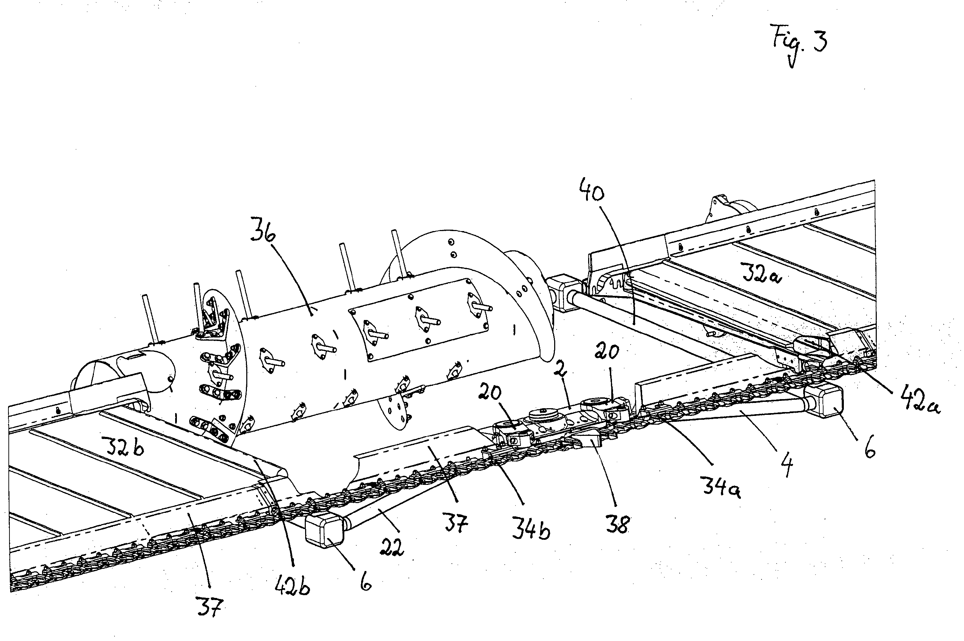

Fig. 3 zeigt eine Ansicht von schräg vorne auf Förderorgane eines Schneidwerks, wobei Teile des Schneidwerks in dieser Ansicht nicht gezeigt sind. Der Schneidwerksboden ist in diesem Ausführungsbeispiel von der Oberseite von Bandförderern 32a, 32b gebildet, wobei der mittlere Bandförderer, der das Erntegut nach hinten abfördert, nicht gezeigt ist. Die beiden gezeigten Bandförderer 32a, 32b befördern das auf ihnen abgelegte Erntegut jeweils quer zur Fahrtrichtung auf den mittleren Bandförderer zu. Aus der in Fig. 3 gezeigten Ansicht von schräg vorne ist erkennbar, dass die Antriebswelle 4 und die Abtriebswelle 22 im Ausführungsbeispiel in der vertikalen Ebene nicht genau parallel zum Messerbalken 34 verlaufen, sondern zu den Seiten hin nach unten um einige Winkelgrade abfällt. Sie haben aber annähernd die gleiche Ausrichtung wie der Messerbalken 34.

Zwischen dem Messerbalken 34 und der Oberseite der Bandförderer 32a, 32b befindet sich eine Stufe 37, über die das geschnittene Erntegut nach dem Schnitt hinweggleiten muss. Aus der Ansicht in Fig. 3 ist erkennbar, dass die Bauhöhe des Getriebegehäuses 2 trotz der vier verschiedenen Ebenen in seinem Innenraum immer noch flacher ausfällt als die im Bereich der seitlichen Bandförderer 32a 32b zu überwindende Stufe 37. Das Getriebegehäuse 2 baut aber auch so kurz, dass dahinter zwanglos ein nach hinten abfördernder Bandförderer angeordnet werden kann, der das Erntegut in den Wirkbereich einer rotierend angetriebenen Einzugswalze 36 als weiteres Förderorgan für das Erntegut befördert.

Der Messerbalken 34 teilt sich im Ausführungsbeispiel in zwei Messerbalkenteile 34a, 34b, deren Trennlinie etwa im Bereich des Halmteilers 38 liegt. Beide Messerbalkenteile 34a, 34b werden von der Antriebsvorrichtung im Getriebegehäuse 2 von der Antriebswelle 4 her angetrieben. Die Antriebswelle 4 ist über ein Winkelgetriebe 6 mit der gesonderten Antriebswelle 40 verbunden, mit der die Antriebskraft von der Rückseite des Schneidwerks her nach vorne übertragen wird. Die gesonderte Antriebswelle 40 liegt etwa parallel zur Umlenkrolle 42a des benachbarten Bandförderers 32.

Die Abtriebswelle 22 mündet in dem in Fig. 3 gezeigten Ausführungsbeispiel in einem Winkelgetriebe 6, über das die Umlenkrolle 42b des linken Bandförderers 32b angetrieben wird. Auf diese Weise wird der linke Bandförderer 32b über die Antriebsvorrichtung für den Messerantrieb von der Rückseite des Schneidwerks her angetrieben.

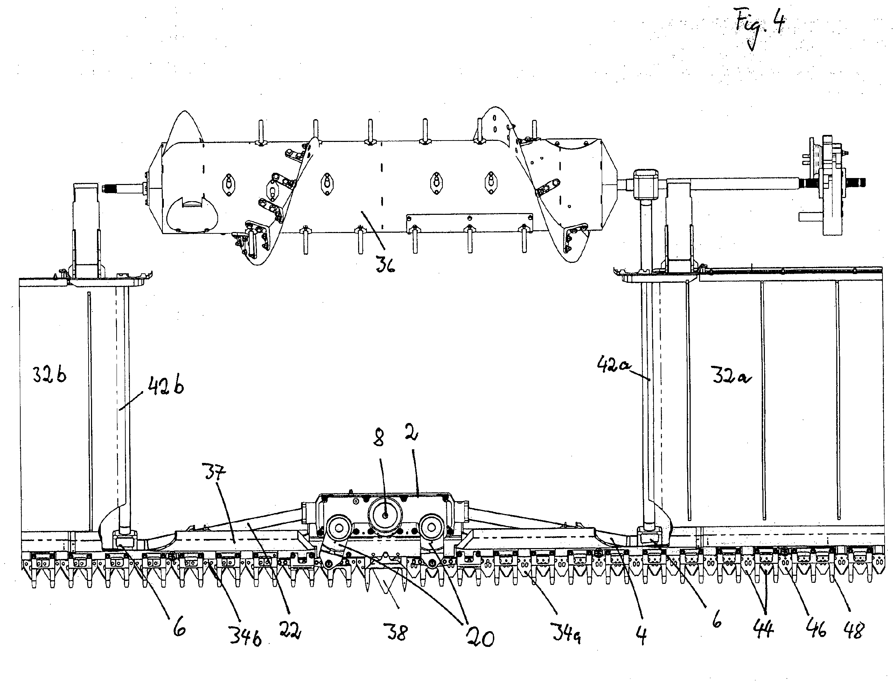

In Fig. 4 ist eine Ansicht von oben auf einen Antriebsstrang gezeigt, bei dem eine gesonderte Antriebswelle 40 durch die als Hohlwelle ausgebildete Umlenkrolle 42a des quer fördernden Bandförderers 32a ausgebildet ist. Wie in dem in Fig. 3 erläuterten Ausführungsbeispiel ist auch hier die Umlenkrolle 42b über die Antriebsvorrichtung für den Messerantrieb von der Rückseite des Schneidwerks her angetrieben. Aus der Ansicht von oben ist erkennbar, dass die Antriebswelle 4 und die Abtriebswelle 22 in der horizontalen Ebene nicht genau parallel zum Messerbalken 34 verlaufen, sondern zur Seite hin um einige Winkelgrade nach vorne weisend ausgerichtet sind. Im Wesentlichen verlaufen die Antriebswelle 4 und die Abtriebswelle 22 aber auch in der horizontalen Ebene annähernd parallel zum Messerbalken 34, etwa im Raum einer gedachten seitlichen Verlängerung des Getriebegehäuses 2, wodurch ein kurz und flach bauender Antrieb möglich ist. Die sich in seitlich Richtung an die Antriebswelle 4 und die Abtriebswelle 22 anschließenden Winkelgetriebe 6 sind in einem Bereich hinter dem Messerbalken 34 angeordnet.

In der Ansicht von oben in Fig. 4 sind die an den Messerbalkenteilen 34a, 34b befestigten Messerklingen 44 gut erkennbar, die bei einer Querbewegung der Messerbalkenteile 34a, 34b eine scherenartige Schnittbewegung im Zusammenwirken mit den Gegenmessern 46 ausführen, die an den Mähfingern 48 oder als gesonderte Messerklingen ausgebildet sein können. Aus der Ansicht von oben ist auch gut erkennbar, dass die erfindungsgemäße Antriebsvorrichtung für den Messerbalken extrem kurz baut und genügend Freiraum lässt für einen Bandförderer oder einen starren Schneidwerksboden, der sich in Förderrichtung hinter dem Messerbalken und der Stufe zur Abförderung des geschnittenen Ernteguts anschließt.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Schneidwerk zur Ernte von Halmgut mit einem Rahmen, einem Schneidwerksboden, einem an der Frontseite des Schneidwerks angeordneten mehrteiligen Messerbalken (34), dessen Messerbalkenteile (34a, 34b) kolinear zueinander angeordnet und die quer zur Fahrtrichtung oszillierend angetrieben sind, an den Messerbalkenteilen (34a, 34b) befestigten Messerklingen (44), die mit feststehenden oder bewegten mit dem Rahmen verbundenen Gegenmessern (46) interagieren, einer Antriebsvorrichtung zum Antrieb des mehrteiligen Messerbalkens (34), und Förderorganen zur Abförderung des geschnittenen Halmguts, **wobei** hinter den Messerbalkenteilen (34a, 34b) ein Getriebegehäuse (2) angeordnet ist, in dem eine Antriebswelle (4) in einer ersten Ebene im Getriebegehäuse (2) mündet, die Antriebswelle (4) über ein Winkelgetriebe (6) ein drehfest mit einer ortsfest im Getriebegehäuse (2) gelagerten Exzenterwelle (8) verbundenes Zahnrad (10) antreibt, das in einer zweiten Ebene oberhalb oder unterhalb der Antriebswellenebene angeordnet ist, auf der Exzenterwelle (8) im Getriebegehäuse (2) zumindest zwei Exzenterscheiben (12) in einer dritten und vierten Ebene übereinander angeordnet sind, und jeder Exzenterscheibe (12) ein Exzenterhebel (14) in der Ebene der jeweils zugehörigen Exzenterscheibe (12) zugeordnet ist, der mit einem Schwenkhebel (16) verbunden ist, der drehfest mit einer ortsfest gelagerten Schwenkwelle (18) verbunden ist, und mit der Schwenkwelle (18) ein Kurbelarm (20) drehfest verbunden ist, dessen Schwenkbewegung über ein Verbindungselement auf ein Messerbalkenteil (34a, 34b) übertragen wird, **dadurch gekennzeichnet, dass** die Exzenterscheiben (12), die Antriebswelle (4) und das Zahnrad (10) übereinander angeordnet sind.

2. Schneidwerk nach Anspruch 1, **dadurch gekennzeichnet, dass** die Schwenkwellen (18) weiter vorne im Getriebegehäuse (2) angeordnet sind als die Exzenterwelle (8).

3. Schneidwerk nach Anspruch 1 oder 2, **dadurch gekennzeichnet, dass** der Gehäusedeckel (30) des Getriebegehäuses (2) in seinem vorderen dem Messerbalkenteilen (34a, 34b) zugewandten Bereich eine angeschrägte Fläche (24) aufweist.

4. Schneidwerk nach einem der vorhergehenden Ansprüche, **dadurch gekennzeichnet, dass** die Exzenterhebel (14) parallel oder zumindest annähernd parallel zur Längsachse der Messerbalkenteile (34a, 34b) verlaufen.

5. Schneidwerk nach einem der vorhergehenden Ansprüche, **dadurch gekennzeichnet, dass** die Exzenterscheiben (12) einen Drehwinkelversatz von 0° - 179° oder 181° - 360° zueinander aufweisen.

6. Schneidwerk nach einem der vorhergehenden Ansprüche, **dadurch gekennzeichnet, dass** die in das Getriebegehäuse (2) mündende Antriebswelle (4) und/oder die Abtriebswelle (22) quer zur Fahrtrichtung ausgerichtet ist.

7. Schneidwerk nach einem der vorhergehenden Ansprüche, **dadurch gekennzeichnet, dass** die Antriebswelle (4) von einem seitlich am Schneidwerk angeordneten Hydraulik- oder Elektromotor angetrieben ist.

8. Schneidwerk nach einem der vorhergehenden Ansprüche, **dadurch gekennzeichnet, dass** der Antriebsstrang von einer mechanischen Kraftquelle an der Rückwand des Schneidwerks zur Antriebswelle (4) über eine Welle einer Umlenkrolle (42) eines quer zur Vorfahrtrichtung des Schneidwerks umlaufenden Bandförderers (32) oder über eine gesonderte Antriebswelle (40) geführt ist, wobei die am vorderen Ende der Umlenkrolle (42) oder der gesonderten Antriebswelle (40) mündende Rotationsbewegung über ein dort angeordnetes Winkelgetriebe (6) auf die Antriebswelle (4) übertragen wird.

9. Schneidwerk nach einem der vorhergehenden Ansprüche, **dadurch gekennzeichnet, dass** mit der Antriebswelle (4) oder der Exzenterwelle (8) eine Hydraulikpumpe antriebsverbunden ist, mit der das im Getriebegehäuse (2) befindliche Öl in einen Kühlkreislauf gepumpt wird.

10. Schneidwerk nach Anspruch 9, **dadurch gekennzeichnet, dass** an den Kühlkreislauf oder die Hydraulikpumpe ein Hydraulikventil angeschlossen ist, mit dem die Bandspannung eines Bandförderers (32) schaltbar ist.

11. Schneidwerk nach einem der vorhergehenden Ansprüche, **dadurch gekennzeichnet, dass** das Getriebegehäuse (2) eine horizontal verlaufende Teilung zwischen dem Gehäuseboden (28) und dem Gehäusedeckel (30) aufweist.

12. Schneidwerk nach einem der vorhergehenden Ansprüche, **dadurch gekennzeichnet, dass** die Antriebswelle (4) mit einer Abtriebswelle (22) antriebsverbunden ist, die zumindest ein Förderorgan des Schneidwerks antreibt.

13. Schneidwerk nach einem der vorhergehenden Ansprüche, **dadurch gekennzeichnet, dass** im Antriebsstrang zur Antriebswelle (4) eine gesteuerte Lamellenkupplung angeordnet ist.

## Claims

1. Cutting device for harvesting stalk material, comprising a frame, a cutting device base, a multi-part cutter bar (34) arranged on the front of the cutting device, the cutter bar parts (34a, 34b) of which are arranged so as to be colinear with one another and are driven so as to oscillate transversely to the direction of travel, cutter blades (44) fastened to the cutter bar parts (34a, 34b) which interact with stationary or moving counter blades (46) connected to the frame, a drive unit for driving the multi-part cutter bar (34), and conveying members for removing the cut stalk material, a transmission housing (2) being arranged behind the cutter bar parts (34a, 34b), in which transmission housing a drive shaft (4) terminates in the transmission housing (2) in a first plane, the drive shaft (4) driving, via an angular gear (6), a toothed wheel (10) connected for conjoint rotation to an eccentric shaft (8) mounted so as to be fixed in place in the transmission housing (2), which toothed wheel is arranged in a second plane above or below the drive shaft plane, at least two eccentric discs (12) being arranged one above the other in a third and fourth plane on the eccentric shaft (8) in the transmission housing (2), and each eccentric disc (12) being assigned to an eccentric lever (14) in the plane of the relevant associated eccentric disc (12), which eccentric lever is connected to a pivot lever (16) that is connected for conjoint rotation to an pivot shaft (18) mounted so as to be fixed in place, and a crank arm (20) being connected for conjoint rotation to the pivot shaft (18), the pivoting movement of which crank arm is transmitted to a cutter bar part (34a, 34b) via a connecting element, **characterised in that** the eccentric discs (12), the drive shaft (4) and the toothed wheel (10) are arranged one above the other.

2. Cutting device according to claim 1, **characterised in that** the pivot shafts (18) are arranged further forward in the transmission housing (2) than the eccentric shaft (8).

3. Cutting device according to either claim 1 or claim 2, **characterised in that** the housing cover (30) of the transmission housing (2) comprises a bevelled surface (24) in the front region thereof facing the cutter bar parts (34a, 34b).

4. Cutting device according to any of the preceding claims, **characterised in that** the eccentric lever (14) extends in parallel or at least approximately in parallel with the longitudinal axis of the cutter bar parts (34a, 34b).

5. Cutting device according to any of the preceding claims, **characterised in that** the eccentric discs (12) have a rotational angle offset with respect to one another of 0° to 179° or 181° to 360°.

6. Cutting device according to any of the preceding claims, **characterised in that** the drive shaft (4) that terminates in the transmission housing (2) and/or the output shaft (22) is/are oriented transversely to the direction of travel.

7. Cutting device according to any of the preceding claims, **characterised in that** the drive shaft (4) is driven by a hydraulic or electric motor arranged on the side of the cutting device.

8. Cutting device according to any of the preceding claims, **characterised in that** the drivetrain is guided from a mechanical power source on the rear wall of the cutting device to the drive shaft (4) via a shaft of a deflecting roller (42) of a belt conveyer (32) that circulates transversely to the forward direction of travel of the cutting device or via a separate drive shaft (40), the rotational movement terminating at the front end of the deflecting roller (42) or the separate drive shaft (40) being transmitted to the drive shaft (4) via an angular gear (6) arranged at said front end.

9. Cutting device according to any of the preceding claims, **characterised in that** a hydraulic pump by means of which the oil in the transmission housing (2) is pumped into a cooling circuit is drivingly connected to the drive shaft (4) or the eccentric shaft (8).

10. Cutting device according to claim 9, **characterised in that** a hydraulic valve by means of which the belt tension of a belt conveyer (32) can be changed is connected to the cooling circuit or the hydraulic pump.

11. Cutting device according to any of the preceding claims, **characterised in that** the transmission housing (2) comprises a horizontally extending partition between the housing base (28) and the housing cover (30).

12. Cutting device according to any of the preceding claims, **characterised in that** the drive shaft (4) is drivingly connected to an output shaft (22), which drives at least one conveying member of the cutting device.

13. Cutting device according to any of the preceding claims, **characterised in that** a controlled multi-disc clutch is arranged in the drivetrain to the drive shaft (4).

## Revendications

1. Mécanisme de coupe, destiné à la récolte de plantes à tige, comprenant un cadre, une barre porte-lame (34), constituées de plusieurs parties, qui est disposée du côté avant du mécanisme de coupe, dont des éléments (34a, 34b) sont disposés de manière colinéaire entre eux et sont entraînés de manière à osciller transversalement au sens de déplacement, des lames de coupe (44) qui sont fixées aux éléments (34a, 34b) de la barre porte-lame et qui interagissent avec des contre-lames (46) fixes ou mobiles reliées au cadre, un dispositif d'entraînement destiné à entraîner la barre porte-lame (34) constituée de plusieurs parties, et des organes de transport destinés à transporter les plantes à tige coupées, un boîtier de transmission (2) étant disposé en arrière des éléments (34a, 34b) de la barre porte-lame, lequel boîtier de transmission comporte un arbre d'entraînement (4) qui débouche dans un premier plan situé dans le boîtier de transmission (2), l'arbre d'entraînement (4) entraînant une roue dentée (10), reliée solidairement en rotation à un arbre à excentrique (8) logé de manière fixe dans le boîtier de transmission (2), par le biais d'une transmission angulaire (6), laquelle roue dentée est disposée dans un deuxième plan situé au-dessus ou au-dessous du plan de l'arbre d'entraînement, au moins deux disques à excentrique (12) étant disposés les uns au-dessus des autres dans un troisième et un quatrième plan sur l'arbre à excentrique (8) placé dans le boîtier de transmission (2), et chaque disque à excentrique (12) étant associé à un levier à excentrique (14) situé dans le plan du disque à excentrique (12) respectivement associé, lequel levier à excentrique (14) est relié solidairement en rotation à un levier pivotant 16) relié solidairement en rotation à un arbre de pivotement (18) monté de manière fixe, et un bras de manivelle (20) étant lié solidairement en rotation à l'arbre de pivotement (18), bras de manivelle dont le mouvement de pivotement est transmis par le biais d'un élément de liaison à un élément (34a, 34b) de la barre porte-lame, **caractérisé en ce que** les disques à excentrique (12), l'arbre d'entraînement (4) et la roue dentée (10) sont disposées les uns au-dessus des autres.

2. Mécanisme de coupe selon la revendication 1, **caractérisé en ce que** les arbres de pivotement (18) sont disposés plus en avant dans le boîtier de transmission (2) que l'arbre à excentrique (8) .

3. Mécanisme de coupe selon la revendication 1 ou 2, **caractérisé en ce que** le capot (30) du boîtier de transmission (2) possède dans sa zone avant, tournée vers les éléments (34a, 34b) de la barre porte-lame, une surface biseautée (24).

4. Mécanisme de coupe selon l'une des revendications précédentes, **caractérisé en ce que** les leviers à excentrique (14) sont parallèles ou au moins approximativement parallèles à l'axe longitudinal des éléments (34a, 34b) de barre porte-lame.

5. Mécanisme de coupe selon l'une des revendications précédentes, **caractérisé en ce que** les disques à excentrique (12) présentent un décalage d'angle de rotation allant de 0° à 179° ou de 181° à 360° entre eux.

6. Mécanisme de coupe selon l'une des revendications précédentes, **caractérisé en ce que** l'arbre d'entraînement (4) et/ou l'arbre de sortie (22) débouchant dans le boîtier de transmission (2) est orientée transversalement au sens de déplacement.

7. Mécanisme de coupe selon l'une des revendications précédentes, **caractérisé en ce que** l'arbre d'entraînement (4) est entraîné par un moteur hydraulique ou électrique disposé latéralement au mécanisme de coupe.

8. Mécanisme de coupe selon l'une des revendications précédentes, **caractérisé en ce que** la chaîne cinématique allant d'une source d'énergie mécanique au niveau de la paroi arrière au mécanisme de coupe au niveau l'arbre d'entraînement (4) est guidée par un arbre d'un rouleau de renvoi (42) d'une bande transporteuse (32) circulant transversalement au sens d'avancement du mécanisme de coupe (32) ou par un arbre d'entraînement séparé (40), le mouvement de rotation qui débouche à l'extrémité avant du rouleau de renvoi (42) ou de l'arbre d'entraînement séparé (40) étant transmis à l'arbre d'entraînement (4) par le biais d'une transmission angulaire (6) placée à cet endroit.

9. Mécanisme de coupe selon l'une des revendications précédentes, **caractérisé en ce que** une pompe hydraulique est relié en entraînement à l'arbre d'entraînement (4) ou à l'arbre à excentrique (8) laquelle pompe hydraulique pompe l'huile, se trouvant dans le boîtier de transmission (2), pour l'injecter dans un circuit de refroidissement.

10. Mécanisme de coupe selon la revendication 9, **caractérisé en ce qu'**une vanne hydraulique est raccordée au circuit de refroidissement ou à la pompe hydraulique, laquelle vanne hydraulique permet de commuter la tension d'une bande transporteuse (32).

11. Mécanisme de coupe selon l'une des revendications précédentes, **caractérisé en ce que** le boîtier de transmission (2) comporte une cloison s'étendant horizontalement entre le fond de boîtier (28) et le capot de boîtier (30).

12. Mécanisme de coupe selon l'une des revendications précédentes, **caractérisé en ce que** l'arbre d'entraînement (4) est relié en entraînement à un arbre de sortie (22) qui entraîne au moins un organe de transport du mécanisme de coupe.

13. Mécanisme de coupe selon l'une des revendications précédentes, **caractérisé en ce qu'**un embrayage à disques commandé est disposé dans la chaîne cinématique menant à l'arbre d'entraînement (4).
